# EUROPEAN PATENT APPLICATION

(11) **EP 4 424 990 A1**
(43) Date of publication of application: **04.09.2024**
(21) Application number: 23159348.4
(22) Date of filing: 01.03.2023
(51) Int. Cl.: F03D 80/80

(54) **POWER CONVERSION SYSTEM ARRANGEMENT OF A WIND TURBINE**

(71) Applicant: Siemens Gamesa Renewable Energy A/S, 7330 Brande (DK)
(72) Inventor: Jensen, Morten Lauridsen, 8200 Aarhus N (DK); Nielsen, Kim Gade, 7400 Herning (DK)
(74) Representative: SGRE-Association

(57) **Abstract**

A power conversion system arrangement of a wind turbine is provided. The arrangement (250) may comprise a support structure (203) which supports a power conversion system of the wind turbine (100) and which is configured to be mechanically coupled with a tower (101) of the wind turbine. The arrangement (250) may comprise two or more converters (205a-d) of the power conversion system, wherein the two or more converters are configured to convert electrical power generated by the wind turbine and wherein the two or more converters are positioned and supported on a first side (420) of the support structure (203), the first side being an upper or lower side of the support structure (203). The arrangement (250) may comprise one or more transformers (206a-b) of the power conversion system, wherein the one or more transformers are configured to transform electrical power received from the converters and wherein the one or more transformers are positioned and supported on a second side (430) of the support structure which is in a vertical direction opposite to the first side (420).

## Description

### FIELD OF THE INVENTION

The present invention relates to a power conversion system arrangement of a wind turbine. It further relates to a wind turbine comprising such power conversion system arrangement and a method of providing such power conversion system arrangement.

### BACKGROUND

Due to larger and more power generating wind turbines, a wind turbine today requires a power conversion system which has a corresponding high-power rating and which converts and transforms the electrical power generated by the wind turbine adequately before it is provided to a power grid.

However, the sizing of a power conversion system must fall within certain size limits, e.g. due to spatial limits when the power conversion system is to be arranged inside the wind turbine, for example in a nacelle of the wind turbine, or due to the need for regular service of the power conversion system which requires spatial accessibility of the internal components of the power conversion system.

Therefore, to stay within the size limits, the power conversion system is typically composed of plural converter components with a lower power rating, wherein the plural converter components are usually electrically connected in parallel such that each of them processes a part of the generated electrical power.

These components of the power conversion system are for example arranged side by side in the nacelle of the wind turbine. Such arrangement may however constitute a mechanically unfavorable load, i.e. unnecessary mechanical stress, which acts on a support structure of the power conversion system. In such arrangement, the electrical connection of the components with each other may furthermore result in long wiring which follows complex paths, and which may require the conductors to bend or buckle. This may result, due to resulting increased electrical, thermal, and mechanical stresses that act on the wiring, in a higher risk of failure of the power conversion system. Due to the weaker robustness, a high service effort may be required, and the lifetime of the power conversion system may be reduced, both of which keep the operation costs of a wind turbine high. Furthermore, the electrical and thermal stresses that occur during operation of the wind turbine as power losses reduce the efficiency of the power conversion system.

### SUMMARY

Accordingly, there is the need to mitigate at least some of the drawbacks mentioned above and to provide a compact arrangement of a power conversion system that is more robust and that may be operated more efficiently.

This need is met by the features of the independent claims. The dependent claims describe embodiments of the invention.

According to an aspect of the invention, a power conversion system arrangement of a wind turbine is provided. The arrangement comprises a support structure which supports a power conversion system of the wind turbine and which is configured to be mechanically coupled with a tower of the wind turbine. The arrangement further comprises two or more converters of the power conversion system, wherein the two or more converters are configured to convert electrical power generated by the wind turbine and wherein the two or more converters are positioned and supported on a first side of the support structure, the first side being an upper or lower side of the support structure. The arrangement further comprises one or more transformers of the power conversion system, wherein the one or more transformers are configured to transform electrical power received from the converters and wherein the one or more transformers are positioned and supported on a second side of the support structure which is in a vertical direction opposite to the first side.

Such arrangement of the power conversion system is beneficial. The stacked arrangement of the two or more converters and one or more transformers that uses both the first and the second side of the support structure is compact and may improve a distribution of the mechanical loads that act on the support structure and thus reduce mechanical stress, e.g. bending stresses/tensions that act in the support structure interior or that act on coupling means of the support structure for mechanically coupling the support structure with the tower and which result from loading bending moments. Accordingly, the mechanical robustness of the power conversion system arrangement may be improved.

Moreover, the arrangement of the two or more converters on the first side and the one or more transformers on the second side simplifies wiring each converter with an associated transformer since the wiring can be implemented by a short and/or straight direct connection. Accordingly, the mechanical stresses that act on the wiring may be reduced. Furthermore, the electrical and thermal stresses that act on the wiring during operation may be reduced due to a reduced electrical resistance of the shortened and/or straight wiring and, thus, due to reduced heat dissipation. Accordingly, the electrical and thermal robustness of the power conversion system arrangement may be improved.

Moreover, the arrangement may include at least a second transformer that transforms the electrical power received from the plural converters. Accordingly, the flow of generated electrical power that passes a single transformer is reduced, thereby reducing the power losses of the single transformer and, thus, of the power conversion system. Furthermore, the shortened and/or straight wiring may further reduce power losses during operation. Accordingly, the efficiency of the power conversion system arrangement may be improved.

Moreover, because of the arrangement of the two or more converters and the one or more transformers and, optionally, because of using plural converters and plural transformers, the limit of maximum power production of a wind turbine may be increased.

Each of the two or more power converters may be configured to convert at least a part of the electrical power generated by the wind turbine. Each of the two or more power converters may be configured to convert alternating current (AC) into direct current (DC) and vice versa, or AC to AC. The converting may include changing a magnitude, frequency and/or phase angle of the electrical power, in particular of a voltage and/or a current of the electrical power. An example for such converter or power converter is an AC/DC or DC/AC converter or an AC/DC-DC/AC converter, which preferably comprises a DC link.

Each of the two or more power converters may be configured to be electrically coupled with a generator of the wind turbine on a machine side, wherein the generator is configured to generate electrical power from a wind-driven rotor of the wind turbine, and/or with at least one of the one or more transformers on a grid side.

Each of the one or more transformers may be configured to transform at least a part of the electrical power received from at least one of the converters, e.g. from low voltage on machine side to high voltage on grid side. Optionally, each of the one or more transformers may be a configured to transform electrical power received from at least or exactly two of the two or more converters. The transforming may include changing a magnitude of the electrical power, in particular of a voltage and/or current of the electrical power.

Each of the one or more transformers may be a three-phase transformer configured to transform three phases of electrical power. Each of the one or more transformers may comprise primary and secondary windings to which a respective connecting interface may provide access for an electrical connection.

Each of the one or more transformers may be configured to be electrically coupled with at least one of the two or more converters on the machine side, and/or with a power grid on the grid side.

In an example, the support structure may be a rear end support structure that is arranged at a side opposite a side that faces a wind-driven/aerodynamical rotor of the wind turbine.

The two or more converters may comprise/be at least four converters, in particular exactly four converters. Additionally or alternatively, the one or more transformers may comprise/be at least two transformers, in particular exactly two transformers.

The two or more converters may comprise one or more pairs of converters, wherein each of the one or more pairs may be electrically coupled with one of the one or more transformers.

An arrangement of at least four converters and at least two transformers may be beneficial since an increased number of converters and/or transformers may increase the power production of the wind turbine and may reduce a burden on and thus power losses in each of the converters and transformers. This may improve the efficiency of the wind turbine.

Either the first side or the second side may face a base of the tower. Additionally or alternatively, the support structure may extend substantially horizontally from the tower.

The base may for example be a foundation of the tower. The foundation may be fixed or floating, e.g., in the latter case, for a floating wind turbine.

The support structure may comprise two or more first beams that are configured to be mechanically coupled with the tower and two or more second beams each of which mechanically couples at least two of the two or more first beams.

At least a part of the first beams and at least a part of the second beams may form a pattern or structure made from lines/edges, in particular horizontal and vertical lines, crossing each other. Preferably, the pattern comprises one or more polygonal, in particular rectangular, shapes.

The two or more converters and the one or more transformers may be supported by the support structure in accordance with an arrangement pattern comprising a single or repeated shape in order to distribute the mechanical load that acts on the support structure. The two or more converters may comprise converters that are positioned at vertices of the shape, respectively. The one or more transformers may comprise at least one transformer that extends along a line that connects two of the vertices on which the converters are positioned. Preferably, the shape is a four-sided polygon, in particular a rectangle.

When the two or more converters comprise the one or more pairs of converters each of which may be electrically coupled with one of the one or more transformers, each pair and the respective transformer may be arranged in accordance with the arrangement pattern.

It should be clear that the pattern may comprise a single or repeated shape other than a four-sided polygon. For example, the shape may be any regular polygon.

Both the arrangement of the beams to constitute the support structure in accordance with a pattern and the arrangement of the converters and/or the transformers on the support structure in accordance with a pattern may improve a mechanical load distribution. Moreover, the arrangement may improve a mechanical stability of the support structure, e.g. when a converter or transformer is mounted between at least two beams.

Each of the two or more converters may be supported on the support structure at a position at which at least two beams of the support structure meet each other from different directions, and/or each of the one or more transformers may be mounted below and/or between two beams of the support structure.

Each of the one or more transformers may be supported on the support structure at a position at which at least two beams of the support structure meet each other from different directions, and/or each of the two or more converters may be mounted above and/or between two beams of the support structure.

A transformer or converter that is positioned and mounted at least partly between beams of the support structure may transfer and/or absorb mechanical loads that act on the support structure, making it more mechanically stable.

The two or more converters may comprise a first connecting interface which comprises one or more first terminals. The one or more transformers may comprise a second connecting interface which comprises one or more second terminals that are electrically coupled, in particular connected and more particularly directly connected, with the one or more first terminals. The first connecting interface may face the second connecting interface.

It should be clear that an electrically coupling between a transformer and a converter, in particular between a machine side of the transformer and a grid side of the converter (both the converter and the transformer may operate at these respective sides at low voltage), may herein be implemented as a direct connection, e.g., by using one or more conductors, for example busbars, that extend from the one or more first terminals to the one or more second terminals, respectively.

A terminal of the first and/or second terminals may for example be a bushing or a flag, in particular a low voltage bushing or low voltage flag.

The terminal of a component (transformer or converter) may provide an electrical connectivity of the component. In other words, the terminal may receive a conductor in order to electrically connect the component with other components by this conductor.

In an example, the first connecting interface may face the first side of the support structure and/or the second connecting interface may face the second side of the support structure.

Since the first connecting interface and the second connecting interface face each other, a connection between the interfaces may be implemented that is short and/or follows a path that has no or at least a reduced number of bends and/or deflections. Accordingly, the robustness and the efficiency of the power conversion system arrangement may be improved. Moreover, the implementation of such connection may be simply feasible which reduces manufacturing and maintenance effort of a power generation system arrangement and, thus, the monetary effort associated therewith.

A conductor may (directly) connect a converter terminal of the one or more first terminals and an associated transformer terminal of the one or more second terminals. The connection provided by the conductor may be substantially straight or straight. For example, the conductor may be straight.

In order to establish the connection, the converter terminal may be configured to receive the conductor from a first direction and the associated transformer terminal may be configured to receive the conductor from a second direction. The first direction may be aligned with the second direction. Preferably, the aligned directions are parallel or anti-parallel, and/or on a same line.

In an example, each converter terminal of the one or more first terminals may be (directly) connected with an associated transformer terminal of the one or more second terminals by a respective conductor. Each of the connections provided by the respective conductors may be substantially straight.

Additionally or alternatively, each converter terminal may be configured to receive the conductor from a first direction and each associated transformer terminal may be configured to receive the conductor from a second direction. The first direction of each converter terminal may be aligned with the second direction of the associated transformer terminal. Preferably, each pair of aligned directions is parallel or anti-parallel, and/or on a same line.

In other words, a transformer and an associated converter to which the transformer is to be (directly) connected are arranged such on the support structure that each of one or more conductors required for said connection may follow a substantially straight route or path.

The substantially straight route or path allows the use of a conductor that follows a straight line and that may be solid and composed of a single component, e.g. a busbar comprising only one bar, in order to (directly) connect a pair of terminals. A busbar is in general a robust conductor, i.e. it may be able to be operated under higher electrical and/or mechanical loads than for example a cable. However, when a complex route or path has to be followed by the conductor, the busbar may be required to be composed of plural conductor bars attached to each other, wherein each point of attachment may weaken this robustness. Accordingly, a single-component or one-bar busbar may be more robust and, thus, the electrical and mechanical robustness of the power conversion system arrangement may be improved.

The one or more first terminals may be electrically coupled, in particular connected and more particularly directly connected, with the one or more second terminals by means of a busbar, in particular a braided or solid busbar. Preferably each of the one or more first terminals is coupled with (a different) one of the one or more second terminals.

The use of busbars in general may be beneficial due to their higher robustness compared to, for example, cables. A braided busbar may additionally maintain a certain flexibility which renders an implementation in the power conversion system arrangement more feasible.

According to an aspect of the invention, a wind turbine is provided. The wind turbine comprises any of the power conversion system arrangements described herein.

The wind turbine may for example be an onshore or offshore wind turbine. In the latter case, the wind turbine may comprise a floating or fixed base.

The wind turbine may comprise a mounting structure, e.g. a bedframe, on which a support structure, e.g. a rear end support structure, of the arrangement is mounted in order to mechanically couple the arrangement with a tower of the wind turbine. At least a part of the arrangement may be positioned at a rear side opposite a side that faces a rotor of the wind turbine and/or at a side lateral from the side that faces the rotor.

The arrangement may be arranged at an upper end of the wind turbine, in particular at least partly in a nacelle of the wind turbine.

According to an aspect of the invention, a method of providing a power conversion system arrangement of a wind turbine is provided. The arrangement comprises a support structure which supports a power conversion system of the wind turbine and which is configured to be mechanically coupled with a tower of the wind turbine, two or more converters of the power conversion system, wherein the two or more converters are configured to convert electrical power generated by the wind turbine, and one or more transformers of the power conversion system, wherein the one or more transformers are configured to transform electrical power received from the converters. The method comprises providing the support structure. The method further comprises mounting the two or more converters on the support structure such that the two or more converters are positioned and supported on a first side of the support structure, the first side being an upper or lower side of the support structure. The method further comprises mounting the one or more transformers on the support structure such that the one or more transformers are positioned and supported on a second side of the support structure which is in a vertical direction opposite to the first side.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

It should further be clear that the sequence of method steps of a method described herein is not limited to the described sequence. Further, the method is not limited to the described number of steps. Individual steps of the method may be substituted, extended, or not performed.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a wind turbine according to an example.
Fig. 2 is a schematic diagram illustrating a power conversion system arrangement of the wind turbine in a top view according to an example.
Fig. 3 is a schematic diagram illustrating a sectional view of the power conversion system arrangement of the wind turbine according to an example.
Fig. 4 is a schematic diagram illustrating an enlarged view of the power conversion system arrangement shown in figure 3 according to an example.
Fig. 5 is a schematic flow diagram illustrating a method of providing a power conversion system arrangement of a wind turbine according to an example.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

A power converter may herein also be referred to more abbreviated as 'converter' and a power conversion system arrangement may herein also be referred to more abbreviated as 'arrangement', unless otherwise noted or otherwise indicated by the context.

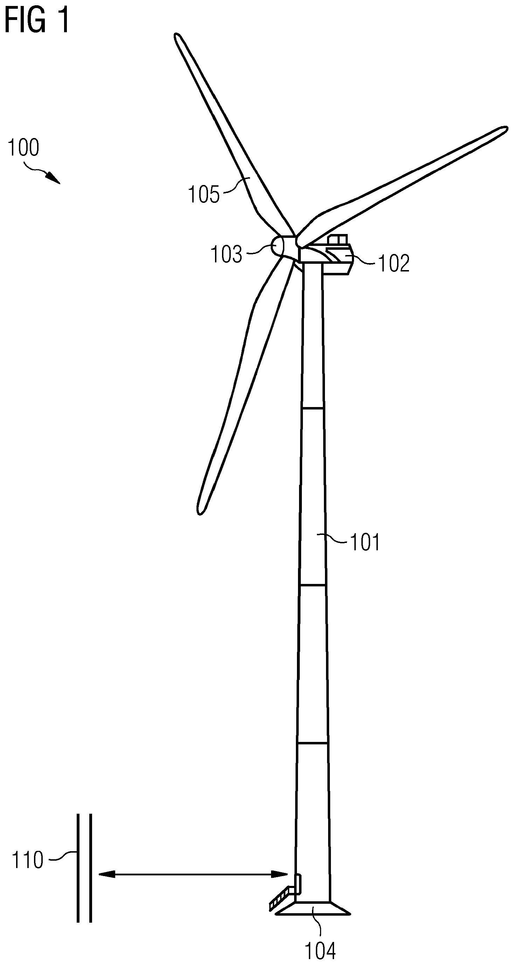

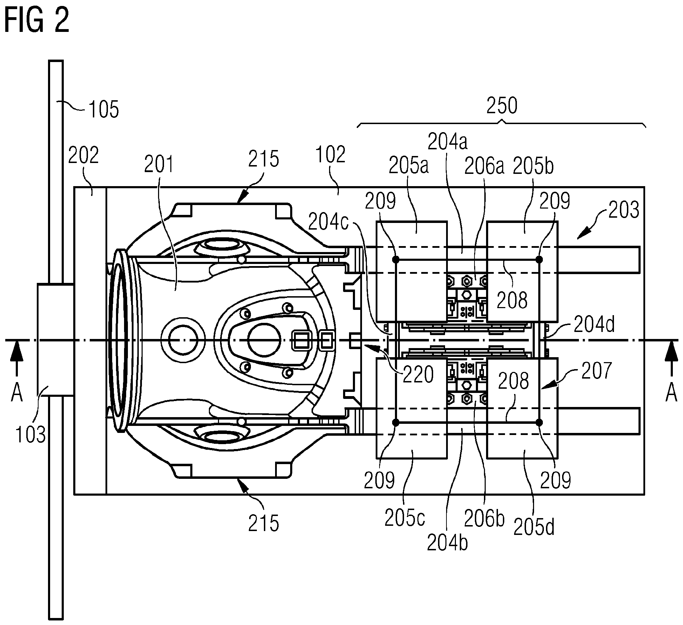

Figure 1 is a schematic drawing illustrating a wind turbine 100 according to an example. The wind turbine 100 may comprise a tower 101 erected on base 104, a nacelle 102 and a rotor 103 with rotor blades 105. The wind turbine 100 may be an offshore or onshore wind turbine and/or may be included in a wind power plant comprising a plurality of wind turbine 100. The wind turbine 100 may generate electrical power and at least a part of the generated electrical power may be converted by a power conversion system of arrangement 250 (shown in figure 2) of the wind turbine 100.

In an example, the wind turbine 100 may be electrically coupled with a power grid 110 to exchange electrical power with the power grid 110. The electrical power exchanged with the grid 110 may include the electrical power generated by the wind turbine 100 and converted by the power conversion system of arrangement 250.

At least a part of the power conversion system of arrangement 250 may be configured to control an operation of the wind turbine 100 and may for this purpose be electrically embedded according to any of the known topologies, e.g. according to a doubly fed induction generator topology or a full converter topology.

The converting performed by the power conversion system of arrangement 250 may include directly or indirectly controlling at least one of a magnitude, a frequency and phase angle of voltage and/or current of the generated electrical power. The converting may be performed using at least one power converter (e.g., power converters 205a-d shown in figure 2) and at least one transformer (e.g., transformers 206a-b shown in figure 2). The at least one power converter may for example be a frequency changer, in particular an AC/DC-DC/AC converter. The at least one transformer may for example transform between low voltage on a machine/generator side of the transformer and high voltage on a grid side of the transformer.

Figure 2 is a schematic diagram illustrating the power conversion system arrangement 250 of the wind turbine 100 in a top view according to an example.

The arrangement 250 may comprise a support structure 203, four power converters 205a-d of the power conversion system, and two transformers 206a, 206b of the power conversion system.

The power converters 205a-d may be configured to convert electrical power generated by the wind turbine 100. The transformers 206a, 206b may be configured to transform the converted electrical power received from the converters. For this purpose, the converters 205a, 205b may be electrically coupled with generator 202 (e.g., a synchronous or asynchronous generator) that is wind-driven by aerodynamical rotor 103 and electrically coupled with the machine side of transformer 206a. Similarly, the converters 205c, 205d may be electrically coupled with generator 202 and the machine side of transformer 206b. On grid side, the transformers 206a-b may be electrically coupled with the grid 110.

The support structure 203 may extend substantially horizontally from the tower 101. The support structure 203 may comprise plural beams 204a-d. The plural beams may include first or main beams 204a-b that may be configured to be mechanically coupled with the tower 101 and second or cross beams 204c-d each of which may mechanically couple the main beams 204a-d. The first beams 204a-b may comprise a greater cross-sectional area than the second beams 204c-d.

The beams 204a-d may be arranged such that the vertices 209 formed by the beams 204a-d constitute a pattern 207 which may include a polygonal and in particular rectangular shape. It should be clear that the pattern 207 may include a shape that differs from a polygonal shape and/or may repeatedly include the shape in dependence on the number of converters and transformers that are to be arranged on the support structure 203 and based on further constructional requirements, e.g. mechanical stability and/or spatial limits.

The pattern 207 may serve as an arrangement pattern. Accordingly, the converters 205a-d may be positioned at the vertices 209 of pattern 207, respectively, and the transformers 206a-b may extend along lines 208 of pattern 207, respectively.

In other words, the converters 205a-d may be supported on the support structure 203 at a position at which two beams of the support structure 203 meet each other in, for example, a rectangular angle, i.e. from different directions, and each of the transformers may be mounted below (i.e., in a normal direction away from that side of the converters 205a-d that faces the support structure 203) and/or between two beams of the support structure.

As shown in the exemplary implementation of figure 2, the converters 205a-d may be supported on an upper side and the transformers 204a-b on a lower side of the support structure 203. The lower side may face the base 104 of wind turbine 100.

It should however be clear that the whole assembly of the converters 205a-d, the transformers 206a-b, and the support structure 203 may be mechanically coupled with tower 101 in an orientation other than that shown in figure 2. For example, the assembly may be rotated by 90 degrees or 180 degrees. In the latter case, the transformers 204a-b are supported on the upper side of the support structure 203 and the converters 205a-d are supported on the lower side of the support structure.

On top of the tower 101 of wind turbine 100 a mounting structure 201, particularly a bedframe, may be mounted. The support structure 203 may be mounted to the mounting structure 201 at a rear side 220. The rear side 220 may be a side opposite the side that faces the aerodynamical rotor 103. In this example, the support structure 203 may constitute a rear end support structure. At the side of the mounting structure 201 that faces the rotor 103, the generator 202 may be mounted. To mount the support structure 203 to the mounting structure 201, for example, the main beams 204a, 204b may be attached to a mechanical interface of the mounting structure 201.

It should be clear that at least a part of the arrangement 250 may be positioned at a side 215 lateral from the side that faces the rotor 103. For this purpose, the mounting structure 201 may comprise mechanical interfaces.

The arrangement 250 of the power conversion system may be arranged inside the nacelle 102. However, the power conversion system arrangement 250 may also be (partly) arranged outside of the nacelle 102.

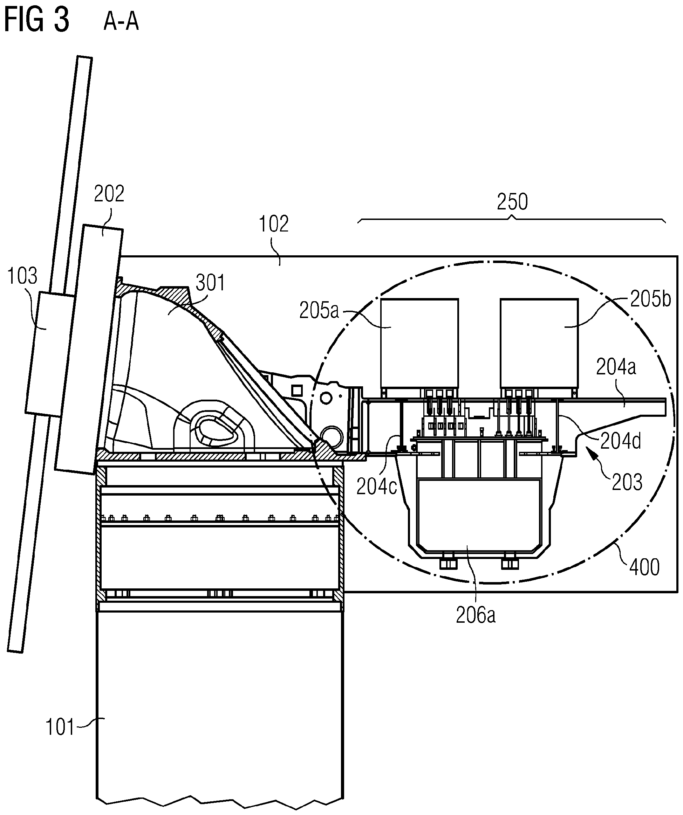

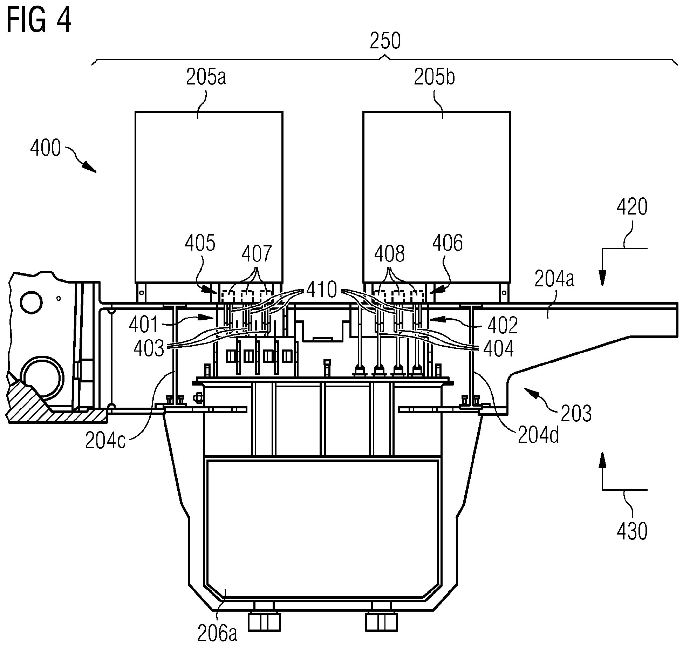

Figure 3 is a schematic diagram illustrating a sectional view of the power conversion system arrangement 250 of the wind turbine 100 according to an example. Figure 3 illustrates the section A-A as shown in figure 2. For better illustration, figure 4 schematically illustrates an enlarged view 400 of the power conversion system arrangement 250, as shown in figure 3.

As can be seen in figure 4, conductors 410 may electrically connect transformer 206a with each of converters 205a, 205b, e.g. to establish a respective low voltage connection. The transformer 206a and the converters 205a, 205b are positioned and oriented such that each of the conductors 410, e.g. solid or braided busbars, may follow a straight line of short distance from the transformer 206a to the converters 205a, 205b.

Transformer 206a may comprise a connecting interface 401 with transformer terminals 403 and a connecting interface 402 with transformer terminals 404. The transformer terminals 403, 404 may for example be positioned on top of the transformer 206a and may receive conductors 410 straightly from above. The converter 205a may comprise a connecting interface 405 with converter terminals 407 and the converter 205b may comprise a connecting interface 406 with converter terminals 408. The converter terminals 407, 408 may for example be positioned at a plinth of converters 205a, 205b and may receive conductors 410 straightly from below. The connecting interfaces 407, 408 may face the connecting interfaces 402, 403. Converter 205a may output one phase of the three-phase AC electrical power via one of the three conductors 410 of converter terminals 407, respectively, to provide the three-phase AC electrical power to transformer 206a. Converter 205b may output one phase of the three-phase AC electrical power via one of the three conductors 410 of converter terminals 408, respectively, to provide the three-phase AC electrical power to transformer 206a.

It is noted that in dependance on a type and/or shape of a terminal, the terminal may allow to receive a conductor only from a specific direction. To avoid bending or buckling of the conductor in such case, a pair of terminals that are to be connected with each other may be positioned and/or oriented such that the directions of the pair of terminals are aligned parallel on a same line.

It should be clear that the outlined with respect to figures 3 and 4 correspondingly applies to transformer 206b and its associated converters 205c, 205d.

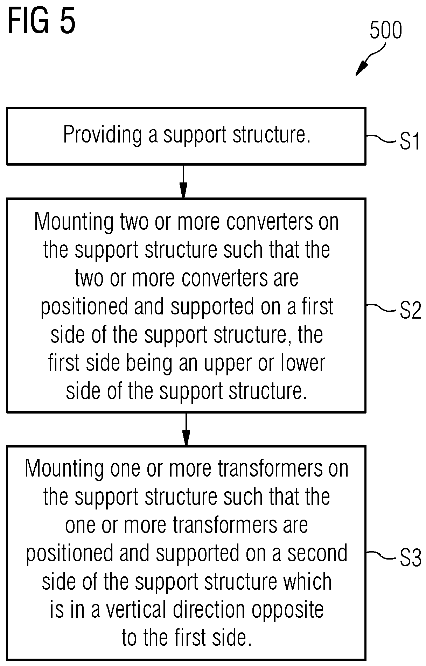

Figure 5 is a schematic flow diagram illustrating a method 500 of providing a power conversion system arrangement of a wind turbine, e.g. the power conversion system arrangement 250, according to an example.

The arrangement may comprise a support structure which supports a power conversion system of the wind turbine and which may be configured to be mechanically coupled with a tower of the wind turbine, two or more converters of the power conversion system, wherein the two or more converters are configured to convert electrical power generated by the wind turbine, and one or more transformers of the power conversion system, wherein the one or more transformers are configured to transform electrical power received from the converters.

In a step S1, the method 500 may comprise providing the support structure. In a step S2, the method 500 may comprise mounting the two or more converters on the support structure such that the two or more converters are positioned and supported on a first side of the support structure, the first side being an upper or lower side of the support structure. In a step S3, the method 500 may comprise mounting the one or more transformers on the support structure such that the one or more transformers are positioned and supported on a second side of the support structure which is in a vertical direction opposite to the first side.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A power conversion system arrangement of a wind turbine, wherein the arrangement (250) comprises
a support structure (203) which supports a power conversion system of the wind turbine (100) and which is configured to be mechanically coupled with a tower (101) of the wind turbine,
two or more converters (205a-d) of the power conversion system, wherein the two or more converters are configured to convert electrical power generated by the wind turbine and wherein the two or more converters are positioned and supported on a first side (420) of the support structure (203), the first side being an upper or lower side of the support structure (203), and
one or more transformers (206a-b) of the power conversion system, wherein the one or more transformers are configured to transform electrical power received from the converters and wherein the one or more transformers are positioned and supported on a second side (430) of the support structure which is in a vertical direction opposite to the first side (420) .

2. The arrangement of claim 1, wherein the two or more converters (205a-d) comprise at least four converters, and/or
wherein the one or more transformers (206a-b) comprise at least two transformers.

3. The arrangement of claim 1 or 2, wherein either the first side (420) or the second side (430) faces a base (104) of the tower (101), and/or
wherein the support structure (203) extends substantially horizontally from the tower (101).

4. The arrangement of any of the preceding claims, wherein the support structure (203) comprises two or more first beams (204a-b) that are configured to be mechanically coupled with the tower and two or more second beams (204c-d) each of which mechanically couples at least two of the two or more first beams (204a-b).

5. The arrangement of any of the preceding claims, wherein the two or more converters (205a-d) and the one or more transformers (206a-b) are supported by the support structure (203) in accordance with an arrangement pattern (207) comprising a single or repeated shape in order to distribute the mechanical load that acts on the support structure,
wherein the two or more converters (205a-d) comprise converters that are positioned at vertices (209) of the shape, respectively,
wherein the one or more transformers (206a-b) comprise at least one transformer that extends along a line (208) that connects two of the vertices (209) on which the converters are positioned,
wherein preferably the shape is a four-sided polygon, in particular a rectangle.

6. The arrangement of any of the preceding claims,
wherein each of the two or more converters (205a-d) is supported on the support structure (203) at a position at which at least two beams (204a-d) of the support structure meet each other from different directions, and/or
wherein each of the one or more transformers (206a-b) is mounted below and/or between two beams (204a-d) of the support structure.

7. The arrangement of any of the preceding claims,
wherein each of the one or more transformers (206a-b) is supported on the support structure (203) at a position at which at least two beams (204a-d) of the support structure meet each other from different directions, and/or
wherein each of the two or more converters (205a-d) is mounted above and/or between two beams (204a-d) of the support structure.

8. The arrangement of any of the preceding claims,
wherein the two or more converters (205a-d) comprise a first connecting interface (405) which comprises one or more first terminals (407),
wherein the one or more transformers (206a-b) comprise a second connecting interface (401) which comprises one or more second terminals (403) that are electrically coupled, in particular connected, with the one or more first terminals (407),
wherein the first connecting interface (405) faces the second connecting interface (401).

9. The arrangement of claim 8, wherein a conductor (410) connects a converter terminal of the one or more first terminals (407) and an associated transformer terminal of the one or more second terminals (403), and
wherein said connection provided by the conductor is substantially straight.

10. The arrangement of claim 8 or 9, wherein a conductor (410) connects a converter terminal of the one or more first terminals (407) and an associated transformer terminal of the one or more second terminals (403),
wherein, in order to establish said connection, the converter terminal is configured to receive the conductor (410) from a first direction and the associated transformer terminal is configured to receive the conductor (410) from a second direction, and
wherein the first direction is aligned with the second direction,
wherein preferably the aligned directions are parallel or anti-parallel, and/or on a same line.

11. The arrangement of any of claims 8-10, wherein the one or more first terminals (407) are electrically coupled with the one or more second terminals (403) by means of a busbar, in particular a braided or solid busbar.

12. A wind turbine, wherein the wind turbine (100) comprises a power conversion system arrangement (250) according to any of the preceding claims.

13. The wind turbine of claim 12, wherein the wind turbine (100) comprises a mounting structure (201) on which a support structure (203) of the arrangement (250) is mounted in order to mechanically couple the arrangement with a tower (101) of the wind turbine,
wherein at least a part of the arrangement (250) is positioned at a rear side (220) opposite a side that faces a rotor (105) of the wind turbine (100) and/or at a side (215) lateral from the side that faces the rotor.

14. The wind turbine of claim 12 or 13, wherein the arrangement (250) is arranged at an upper end of the wind turbine, in particular at least partly in a nacelle (102) of the wind turbine (100).

15. A method of providing a power conversion system arrangement of a wind turbine, wherein the arrangement (250) comprises a support structure (203) which supports a power conversion system of the wind turbine (100) and which is configured to be mechanically coupled with a tower (101) of the wind turbine (100), two or more converters (205a-d) of the power conversion system, wherein the two or more converters (205a-d) are configured to convert electrical power generated by the wind turbine (100), and one or more transformers (206a-b) of the power conversion system, wherein the one or more transformers (206a-b) are configured to transform electrical power received from the converters (205a-d), wherein the method (500) comprises
providing (s1) the support structure,
mounting (s2) the two or more converters (205a-d) on the support structure (203) such that the two or more converters are positioned and supported on a first side (420) of the support structure, the first side being an upper or lower side of the support structure, and
mounting (s3) the one or more transformers (206a-b) on the support structure (203) such that the one or more transformers are positioned and supported on a second side (430) of the support structure which is in a vertical direction opposite to the first side (420).
